# EUROPÄISCHE PATENTSCHRIFT

(11) **EP 1 457 096 B1**
(45) Veröffentlichungstag und Bekanntmachung des Hinweises auf die Patenterteilung: **26.04.2006**
(21) Anmeldenummer: 02793102.1
(22) Anmeldetag: 20.12.2002
(51) Int. Cl.: H05B 41/00, H05B 41/38

(54) **ELEKTRONISCHES VORSCHALTGERÄT UND BETRIEBSVERFAHREN FÜR EINE GASENTLADUNGSLAMPE**
ELECTRONIC BALLAST AND OPERATING METHOD FOR A GAS DISCHARGE LAMP
REGULATEUR ELECTRONIQUE ET PROCEDE D'UTILISATION D'UNE LAMPE A DECHARGE GAZEUSE

(30) Priorität: 20.12.2001 DE 10163032
(43) Veröffentlichungstag der Anmeldung: 15.09.2004
(60) Teilanmeldung: 05021743.9
(73) Patentinhaber: TridonicAtco GmbH & Co. KG, 6851 Dornbirn (AT)
(72) Erfinder: SEIBT, Marco, D-85386 Eching (DE); LUDORF, Werner, D-83324 Ruhpolding (DE); ZUDRELL-KOCH, Stefan, A-6850 Dornbirn (AT); MARENT, Günther, A-6780 Bartholomäberg (AT)
(74) Vertreter: Rupp, Christian
(86) Internationale Anmeldenummer: PCT/EP2002/014669
(87) Internationale Veröffentlichungsnummer: WO 2003/055278

(56) Entgegenhaltungen:
- US-A- 5 705 897
- US-A- 5 748 460
- PATENT ABSTRACTS OF JAPAN vol. 1996, no. 11, 29. November 1996 (1996-11-29) & JP 08 191567 A (CANON INC), 23. Juli 1996 (1996-07-23)

## Beschreibung

Die Erfindung betrifft ein elektronisches Vorschaltgerät sowie ein Betriebsverfahren für eine Gasentladungslampe, mit einem von einer Gleichspannungsquelle gespeisten Gleichspannungskonverter mit getaktetem Schalter und geregelter Ausgangsspannung, einem von der Ausgangsgleichspannung des Gleichspannungskonverters gespeisten Wechselrichter, und einer Regelschaltung, der ein Sollwertsignal sowie ein der Ausgangsgleichspannung des Gleichspannungskonverters entsprechendes Istwertsignal zugeführt wird, und die als Stellwertsignal pulsweitenmodulierte Einschaltimpulse für den getakteten Schalter erzeugt.

Ein derartiges elektronisches Vorschaltgerät ist beispielsweise nach der US 5,705,897 bekannt.

Die Gleichspannungsquelle für ein derartiges elektronisches Vorschaltgerät ist normalerweise ein an das Netz angeschlossener Gleichrichter. Der Gleichspannungskonverter bildet dann einen PFC-Zwischenkreis (PFC = power factor correction), dessen Aufgabe es ist, gegenüber dem Netz als quasi Ohm'sche Last zu erscheinen. Am Eingang des Gleichspannungskonverters liegen die Netzhalbwellen. Der Eingangsstrom ist von Impulsen gebildet, deren Amplitude ebenfalls Sinushalbwellen abbilden. Zwischen den Halbwellen der Eingangsspannung und den von den Amplituden der Stromimpulse gebildeten Halbwellen besteht keine Phasenverschiebung, so dass eine Blindbelastung des Netzes vermieden und eine Erzeugung von störenden Oberwellen auf ein zulässiges Maß reduziert wird.

Es sind verschiedene Typen von Gleichspannungskonvertern bekannt, die beispielsweise in dem Buch von U. Tietze und Ch. Schenk "Halbleiterschaltungstechnik", Springer-Verlag 1991, 9. Auflage, Seiten 561 bis 586 beschrieben sind. Allen gemeinsam ist, dass sie mindestens einen getakteten Schalter und mindestens zwei Speicherelemente enthalten. Für elektronische Vorschaltgeräte wird meistens ein Aufwärts-Konverter-Typ verwendet, der - vom Eingang zum Ausgang gesehen - aus einer Ladedrossel in einem ersten Längszweig, einem getakteten Schalter in einem ersten Querzweig, einer Diode in einem zweiten Längszweig und einem Speicherkondensator in einem zweiten Querzweig besteht.

Es besteht seit längerem die Tendenz, elektronische Vorschaltgeräte - soweit möglich - in integrierter Schaltungstechnik, d.h. als ASIC (application specific integrated circuit) herzustellen.

Aus der US 5,748,460 ist eine Spannungsversorgung für bildgebende Einrichtungen bekannt, Die Vorrichtung weist dabei einen ersten Zähler A sowie einen zweiten Zähler B auf.

Der Erfindung liegt die Aufgabe zugrunde, einen Entwurf für die Regelschaltung für den getakteten Schalter anzugeben, der sich ebenfalls für die Realisierung im Rahmen eines ASIC eignet.

Die Aufgabe ist erfindungsgemäß durch die Merkmale der unabhängigen Ansprüche gelöst. Die abhängigen Ansprüche bilden den zentralen Gedanken der Erfindung in vorteilhafter Weise weiter.

Ausführungsbeispiele der Erfindung sind nachfolgend anhand der Zeichnung beschrieben. Es zeigen:
- Fig. 1: ein Blockschaltbild eines elektronisches Vorschaltgerätes mit einer ersten Ausführungsform der erfindungsgemäßen Regelschaltung;
- Fig. 2: Zeitdiagramme
(a) des Zählverhaltens des zweiten Zählers,
(b) des Verlaufs des durch die Ladedrossel fließenden Stromes,
(c) des Rücksetzssignals (Uₙ) für den zweiten Zähler,
(d) der Einschaltimpulse für den getakteten Schalter, und
(e) der Systemtaktimpulse, die den Zählern zugeführt werden;
- Fig. 3: ein Blockschaltbild einer verallgemeinerten Ausführungsform der erfindungsgemäßen Regelschaltung;

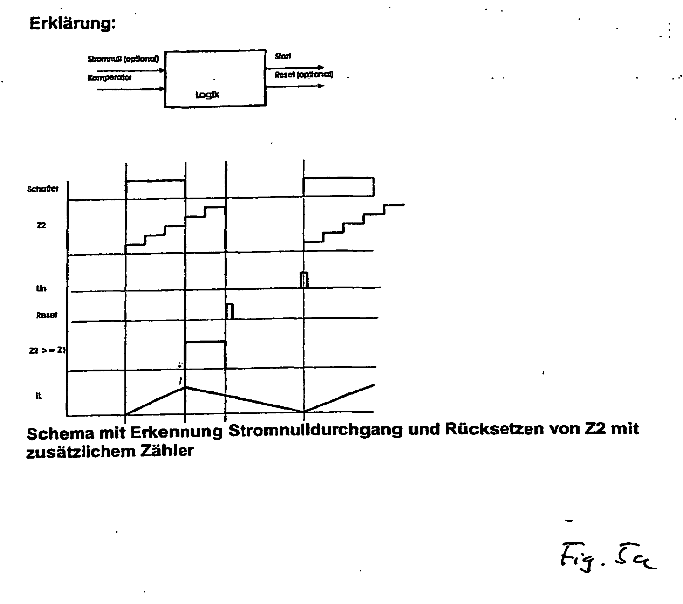

- Fig. 4: eine vergrößerte Darstellung des FIR-Filters in der Schaltung von Fig. 3,
- Fig.5a-c: den Verlauf des Strom durch die Ladespule in verschiedenen Szenarien, und
- Fig.6a-c: verschiedene Möglichkeiten zum Start bzw. Reset des zweiten Zählers in Figuren 1 und 3.

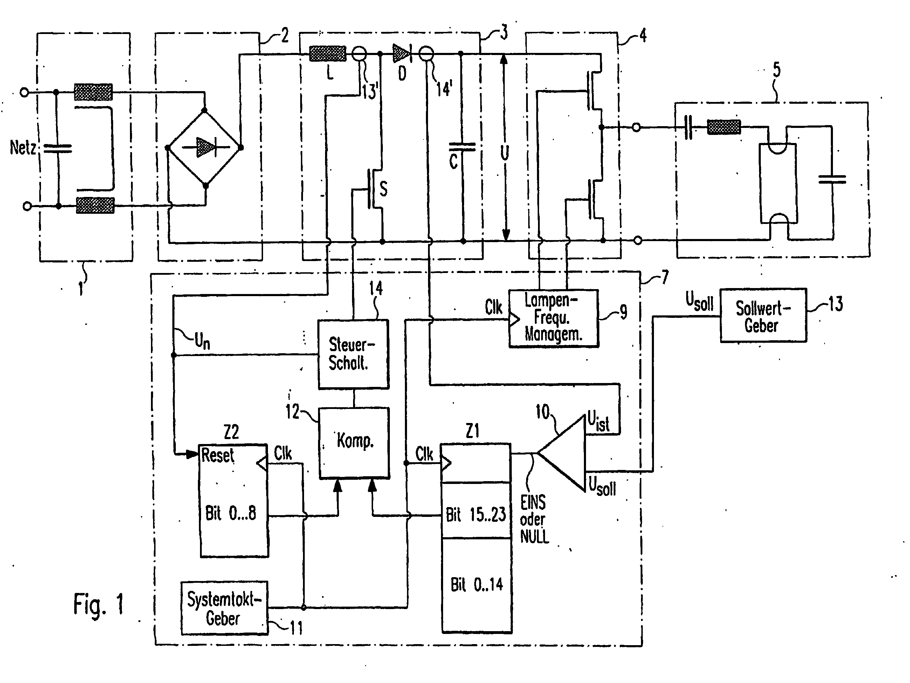

Das in Fig. 1 gezeigte Vorschaltgerät weist die nachfolgend erläuterten Schaltungsteile auf. Ein HF-Filter 1 ist mit dem Netz verbunden und führt einer Gleichrichterschaltung 2 die gefilterte Netzspannung zu. Die Gleichrichterschaltung 2 erzeugt an ihrem Ausgang Halbwellen der Netzspannung, die dem Gleichspannungskonverter 3 zugeführt werden. Der Gleichspannungskonverter 3 erzeugt an seinem Ausgang eine Spannung U, die durch Regelung unabhängig von Änderungen der Last konstant gehalten wird. Die Ausgangsgleichspannung U des Gleichspannungskonverters 3 wird einem Wechselrichter 4 zugeführt, an den sich eine Last 5 anschließt. Die Last 5 enthält die mit dem elektronischen Vorschaltgerät zu betreibendem Gasentladungslampe.

Es sei vorab angemerkt, dass alle Bauteile der im folgenden näher beschriebenen Regelung mittels Software, Hardware oder einer Hybridlösung ausgeführt werden können. Insbesondere der (langsame) Zähler Z1 kann mittels Software implementiert sein. Der Zähler Z2 kann vorzugsweise durch ein Hardware-Modul gebildet werden.

Der Gleichspannungskonverter 3 besteht aus einer Ladedrossel L in einem ersten Längszweig, einem getakteten Schalter S in einem ersten Querzweig, einer Diode D in einem zweiten Längszweig und einem Speicherkondensator C in einem zweiten Querzweig.

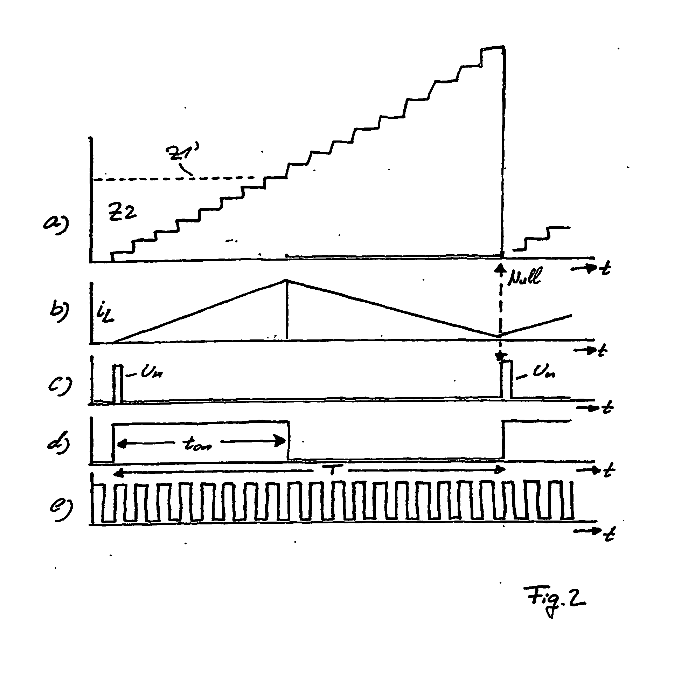

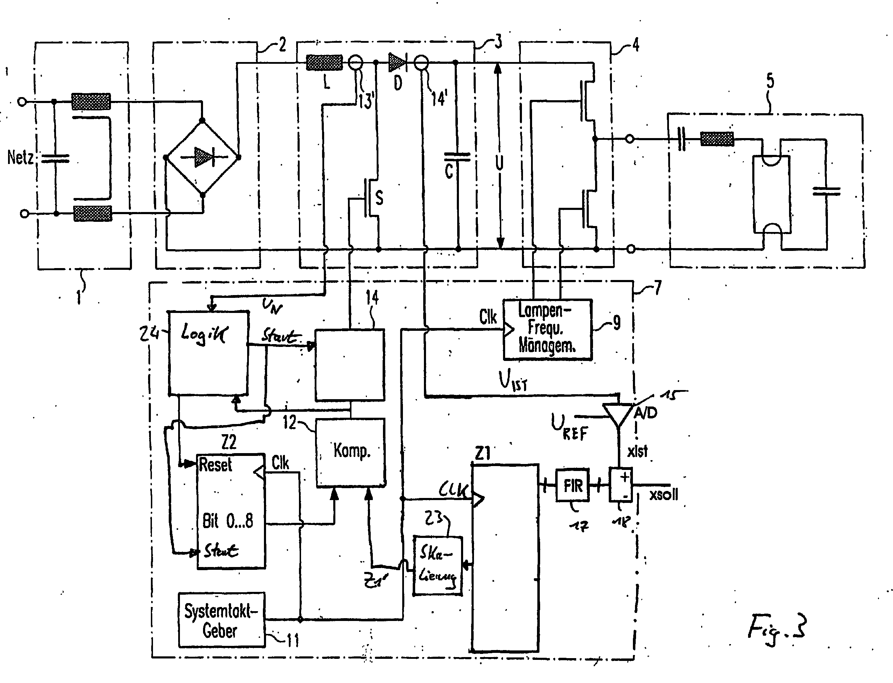

Der getaktete Schalter S wird mit pulsweitenmodulierten Einschaltimpulsen leitend geschaltet. Die Einschaltimpulse sind in Fig. 2(d) gezeigt. Die Einschaltzeit ist dort mit tₒₙ bezeichnet. Der zeitliche Abstand zwischen den Eingangsflanken der Einschaltimpulse ist mit T bezeichnet.

Wenn der Schalter S auf Durchgang geschaltet ist, fließt durch die Ladedrossel L ein ansteigender Ladestrom i_{L}. Wenn der Schalter S auf Unterbrechung geschaltet wird, entlädt sich die in der Drossel (Ladespule) L gespeicherte Energie über die Diode D auf den Speicherkondensator C. In der Entladephase fällt der durch die Ladedrossel L fließende Strom - wie in Fig. 2(b) erkennbar - ab und erreicht schließlich den Nullpunkt.

Je länger die Einschaltzeit tₒₙ des Schalters im Vergleich zur Gesamtzeit T ist, umso höher steigt die Ausgangsgleichspannung U des Gleichspannungskonverters 3 an. Wenn die Einschaltimpulse verkürzt werden, sinkt die Ausgangsgleichspannung U entsprechend ab. Durch gezielte Variation der Einschaltzeit tₒₙ ist es also möglich, die Ausgangsgleichspannung U konstant zu halten.

Die Einschaltimpulansteuerung für den getakteten Schalter S erfolgt durch die Regelschaltung 7. Der Regelschaltung 7 wird bspw. von einem externen Sollwertgeber 13 der analoge Sollwert Uₛₒₗₗ für die Ausgangsgleichspannung U zugeführt. Zur Erzeugung des Istwertes Uᵢₛₜ der Ausgangsgleichspannung U dient ein Gleichspannungssensor 14', der die Ausgangsgleichspannung U des Gleichspannungskonverters 3 misst.

Mit einem Nulldurchgangsdetektor 13' (bspw. einem Gleichstromsensor wie dargestellt oder einem Spannungsteiler) wird der Zeitpunkt erfasst, zu dem der durch die Ladedrossel L fließende Gleichstrom in der abklingenden Phase den Nullpunkt erreicht. Zu dem genannten Zeitpunkt wird in dem vorliegenden Ausführungsbeispiel das Rücksetzsignal Uₙ erzeugt (siehe Fig. 2(c)).

Im übrigen kann auch aus der am Punkt 13' anliegenden Spannung auf den Nullpunkt des Stroms durch die Ladedrossel geschlossen werden.

Die Regelschaltung 7 enthält einen ersten Zähler Z1 sowie einen zweiten Zähler Z2. Die beiden Zähler Z1 und Z2 sind mit einem Systemttaktgeber 11 verbunden, der die in Fig. 2(e) gezeigten Systemtaktimpulse CLK erzeugt.

Der zweite Zähler Z2 wird nur in Aufwärtszählrichtung betrieben und hat bspw. 2⁹ Zählstufen, die durch die Bits 0-8 repräsentiert sind. Der Reset-Eingang des zweiten Zählers Z2 ist in dem vorliegenden Ausführungsbeispiel mit dem Gleichstromsensor 13 verbunden. Wenn an dem Reset-Eingang das Rücksetzsignal Uₙ auftritt, wird der laufende Zählvorgang des zweiten Zählers Z2 abgebrochen. Gleichzeitig wird - wie in Fig. 2 (a) gezeigt - der zweite Zähler Z2 zurückgesetzt, und es wird ein neuer Zählvorgang in Lauf gesetzt. Der Rücksetzvorgang des zweiten Zählers Z2 erfolgt somit zu dem Zeitpunkt, zu dem der durch die Ladedrossel L fließende Gleichstrom in der abklingenden Phase den Nullpunkt erreicht (s.o.).

Der erste Zähler Z1 hat bspw. 2²⁴ Zählstufen, die durch die Bits 0-23 repräsentiert sind. Er kann in beiden Richtungen zählen, also aufwärts und abwärts.

Mit dem ersten Zähler Z1 ist ferner der Ausgang eines (hier) 1-bit-A/D-Wandlers 10 verbunden, dessen beiden Eingängen das analoge Istwertsignal Uᵢₛₜ und das analoge Sollwertsignal Uₛₒₗₗ zugeführt werden. Am Ausgang des 1-bit-A/D-Wandlers wird ein digitales Signal in Form einer EINS oder NULL ausgegeben. Der Digitalwert EINS wird dabei erzeugt, wenn das Istwertsignal Uᵢₛₜ größer als oder gleich dem Sollwertsignal Uₛₒₗₗ ist. Der Digitalwert NULL wird dementsprechend erzeugt, wenn das Istwertsignal Uᵢₛₜ kleiner ist als das Sollwertsignal Uₛₒₗₗ.

Wenn dem ersten Zähler Z1 der Digitalwert NULL zugeführt wird, zählt er aufwärts. Wenn ihm der Digitalwert EINS zugeführt wird, zählt er abwärts.

Die Zählerstände der 2⁹ Zählstufen des zweiten Zählers Z2 werden durch einen Komparator 12 mit den entsprechenden 2⁹ höherwertigen Zählstufen des ersten Zählers Z1 verglichen. Die 2⁹ höherwertigen Zählstufen des ersten Zählers Z1 werden durch die Bits 15-23 repräsentiert. Der digitale Komparator 12 stellt den Zeitpunkt fest, zu dem die zu vergleichenden Bits der beiden Zähler Z1 und Z2 in Übereinstimmung gelangen und meldet diese Übereinstimmung einer Steuerschaltung 14 für den Schalter S. Der Steuerschaltung 14 wird ferner das von dem Gleichspannungssensor 13 erzeugte Rücksetzsignal Uₙ zugeführt. Die Steuerschaltung 14 schaltet den Schalter S ein, d.h. in den leitfähigen Zustand, wenn sie das Rücksetzsignal Uₙ erhält, und sie schaltet den Schalter S aus, d.h. in den Sperrzustand, wenn der Komparator 12 den Gleichstand (Übereinstimmung) der Zählerstände der zu vergleichenden Bits der beiden Zähler Z1 und Z2 meldet.

Die Steuerung des Wechselrichters 4 erfolgt über einen Schaltungsblock 9, der das Lampenfrequenzmanagement übernimmt.

Durch die hohe Zahl an Zählstufen des Zählers Z1 ist die Regelfrequenz relativ niedrig, und die Regeländerungen erfolgen in kleinen Schritten. Dadurch, dass die Zahl der Zählstufen des Zählers Z2 erheblich niedriger als die des Zählers Z1 ist, ist eine Überabtastung (Oversampling) gewährleistet. Wenn der Systemtaktgeber beispielsweise mit einer Taktfrequenz von 10 MHz arbeitet, so wird der Schalter S mit einer Schaltfrequenz zwischen 5 MHz und 39 kHz geschaltet. Die durch den Zähler Z1 bestimmte Regelfrequenz beträgt dagegen nur 75 Hz.

Die niederwertigen Zählstufen des Zählers Z1, die durch die Bits 0-14 repräsentiert sind, dienen praktisch als digitaler Integrator. Die höherwertigen Zählstufen, die durch die Bits 15-23 repräsentiert werden, bestimmten dagegen die Einschaltzeit tₒₙ für den Schalter S.

Der Gleichspannungskonverter 3 bildet einen PFC-Zwischenkreis für das elektronische Vorschaltgerät. Er gewährleistet, dass das Vorschaltgerät gegenüber dem Netz als Ohm'sche Last wirkt.

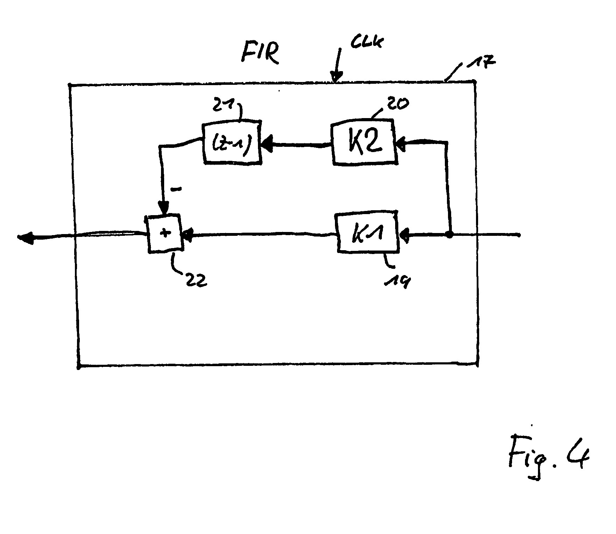

Fig. 1 zeigt wie gesagt ein spezielles Ausführungsbeispiel des erfindungsgemäßen Schaltungsprinzips, während Fig. 3 eine allgemeine Darstellung des erfindungsgemässen Konzepts zeigt. In Fig. 3 sind zur besseren Übersichtlichkeit nur Elemente der Regelschaltung dargestellt, wobei zu den Komponenten der in Fig. 1 gezeigten Schaltung identische Komponenten in Fig. 3 mit dem gleichen Bezugszeichen versehen sind.

Allgemein wird gemäss der Erfindung wie in Fig. 3 gezeigt die Differenz zwischen dem Sollwert U_{REF} und dem der Ausgangsgleichspannung U des Gleichspannungskonverters entsprechenden Istwert Uᵢₛₜ über einen A/D-Wandler 15 als n-bit-Information X_{IST} weitergegeben wird. Anstelle eines einfachen Vergleichs zwischen Sollwert Uₛₒₗₗ und Istwert Uᵢₛₜ durch den bei der Schaltung gemäß Fig. 1 vorgesehenen Komparator wird nunmehr also zusätzlich noch die Höhe der Regelabweichung zwischen den beiden Eingangswerten U_{REF} und Uᵢₛₜ erfaßt und im weiteren Verlauf der Regelschleife berücksichtigt. Diese n-bit-Information X_{IST} wird dem ersten Zähler Z1 zugeführt, der wiederum - je nachdem, ob der Sollwert U_{REF} größer ist als der Istwert Uᵢₛₜ oder umgekehrt - mit zu der Differenz proportionaler Schrittweite aufwärts bzw. abwärts zählt.

Die Schrittweite dieses Zählers Z1 ist also nun variabel und hängt von dem Absolutwert der Differenz X_{IST} ab. Liegt beispielsweise eine hohe Abweichung zwischen Sollwert U_{REF} und Istwert Uᵢₛₜ vor, so wird die Schrittweite erhöht, da hierdurch eine schnellere Anpassung der Einschaltzeit für den Schalter S erhalten wird. Umgekehrt wird bei lediglich geringen Abweichungen zwischen Sollwert Uₛₒₗₗ und Istwert Uᵢₛₜ die Schrittweite des Zählers Z1 herabgesetzt werden.

Die Steuerung der Schrittweite erfolgt über ein Digitalfilter, insb. einen als sog. FIR-Filter (FIR = Finite Impulse Response) 17 ausgebildeten Eingangsblock des Zählers Z1. Das Digitalfilter kann auch bspw, ein IIR (Infinite Impulse Response) Filter sein.

Das vorgeschaltete FIR-Filter 17 in dem vorliegenden Ausführungsbeispiel ist ein lineares, zeitdiskretes System, dessen Ausgangssignal die gewichtete Summe des aktuellen Eingangssignals sowie einer bestimmten Anzahl vergangener Abtastwerte darstellt. Die konkreten Eigenschaften des FIR-Filters können durch entsprechende Wahl der Gewichtungskoeffizienten eingestellt werden.

Gemäss der Implementierung in Fig.3 weist dieses FIR-Filter 17 einen Addierer 18 auf, der einen vorgegebenen digitalen Referenzwert X_{SOLL} von dem zugeführten Wert X_{IST} subtrahiert. Der Ausgang des Addierers 18 wird zwei Proportionalgliedern 19, 20 zugeführt, die eine Multiplikation mit Konstanten K1 bzw. K2 durchführen. Der Ausgang des Prorportionalglieds 20 wird einem Verzögerungsglied 21 zugeführt, das das Signal um einen Takt verzögert (z-1). Der verzögerte Wert wird dann in einem weiteren Addierer 22 von dem Ausgangswert des Proportionalglieds 19 subtrahiert. Der Ausgangswert des weiteren Addierers 22 wird dann dem Zähleingang des ersten Zählers Z1 zugeführt.

Insgesamt bildet die Kombination des FIR-Filters 17 mit dem ersten Zähler Z1 eine PI-Reglerstruktur. Der P-Anteil wird dabei durch die Kombination der differenzierenden Wirkung des Verzögerungsglieds 21 mit der integrierenden Wirkung des Zählers Z1 erreicht. Der I-Anteil wird entsprechend durch das Proportionalglied 19 und den Zähler Z1 gebildet.

Das Datenformat des Eingangs des FIR-Filters 17 ist üblicherweise kleiner als das des Ausgangs. Zumondest am Ausgang wir vorzugsweise ein Fixpoint-Format verwendet.

Der Ausgangswert des Zählers Z1 wird durch ein Skalierglied 23 bspw. durch einen ganzzahligen Faktor geteilt und das Ergebnis Z1' als erstes Eingangssignal an den Komparator 12 weitergegeben. Wenn der ganzzahlige Faktor eine Potenz von "2" ist, entspricht diese Skalierung dem Auslesen der höherwertigen Bits in Figur 1. Indessen können auch andere ganzzahlige Werte, aber auch Fliesskommawerte verwendet werden. Üblicherweise wird der Skalierungsfaktor indessen grösser als Eins sein.

Im übrigen ist in Figur 3 gezeigt, dass durch eine Logikeinheit 24 der Reset des Zählers Z2, der Einschaltvorgang des Schalters S (durch das Signal START in Figur 3) und der Nulldurchgang des Stroms durch die Ladespule voneinander unabhängig gewählt werden können.

Der Logikeinheit 24 wird dazu (optional) das Ausgangssignal des Nullpunktdetektors 13' zugeführt. Weiterhin wird ihr das Augangssignal des Komparators 12 zugeführt. Die Logikeinheit 24 erzeugt andererseits das RESET-Signal für den Zähler Z2 sowie das Startsignal START für die Steuereinheit 14 (bspw. ein Flip-Flop), auf welches Signal START hin die Steuereinheit 14 den Schalter S einschaltet (Beginn eines Einschaltpulses). Der Reset-Vorgang des Zählers Z2 kann ggf. auch schon vor dem Startvorgang des Zählers Z2 und somit unabhängig von dem Start des Zählvorgangs des Zählers Z2 erfolgen. In diesem Fall wird der Zählvorgang des Zählers Z2 (von Null ansteigend) ebenfalls durch das Signal START der Logikeinheit 24 ausgelöst.

Grundsätzlich kann die Logikeinheit 24 das Startsignal START für das Einschalten des Schalters S bei Erfassung des Nulldurchgangs des Stroms durch die Ladespüle und/oder bei Ablauf einer definierten Zeit (bspw. erzeugt durch eine Zeitbasis bzw. einen weiteren Zähler der Logikeinheit 24) ausgeben.

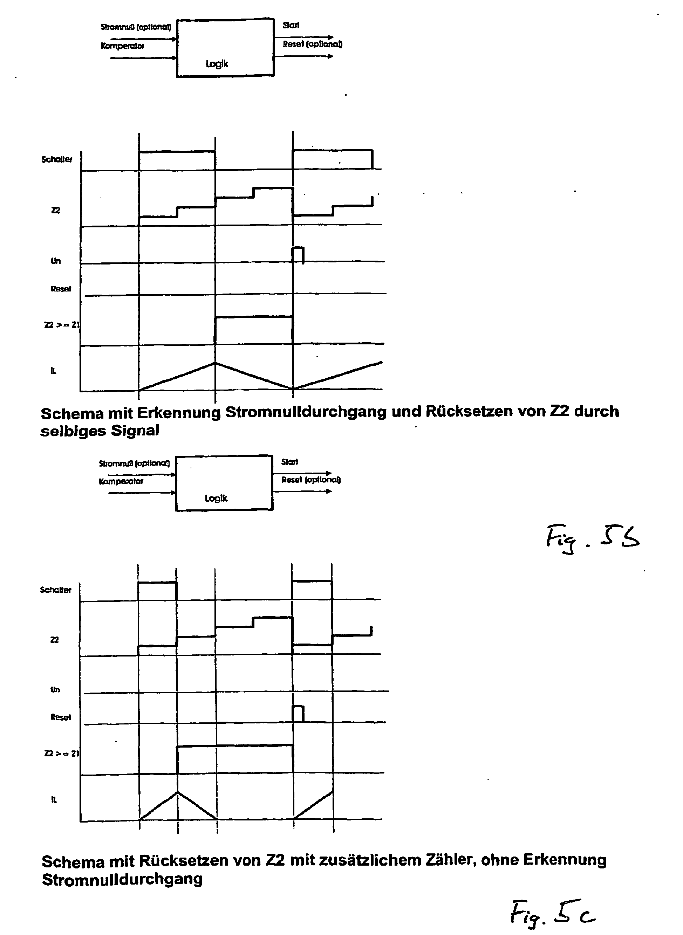

Die sich ergebenden Signalverläufe sind in Figuren 5a - 5c dargestellt und sollen nunmehr erläutert werden.

Figur 5a zeigt den Fall, dass beim Erfassen des Nulldurchgangs des Stroms durch die Ladespule der Zähler Z2 neu gestartet und der Schalter S eingeschaltet werden (Signal START). Der RESET-Vorgang des Zählers Z2 wird unabhängig davon zeitlich vor dem Start des Zählvorgangs durch das Signal RESET ausgelöst. Dies kann bspw. erfolgen, wenn die Logikeinheit 24 erfasst, .dass ein weiterer Zähler (nicht dargestellt), der die Funktion einer Zeitbasis hat, einen bestimmmten Stand (Fiöchststand) erreicht hat. Zu bemerken ist, dass der Reset-Vorgang weiterhin unabhängig und zeitlich nach dem Ausschalten des Schalters S durch dem Komparator 12 erfolgt, der Zähler Z2 läuft also nach dem Ausschalten des Schalters S noch eine gewisse Zeit weiter hoch.

Figur 5b zeigt den Fall, dass wiederum beim Erfassen des Nulldurchgangs des Stroms durch die Ladespule der Zähler Z2 gestartet und der Schalter S eingeschaltet werden (Signal START). Es gibt indessen kein separates RESET- und STARTSignal für den Zähler Z2, vielmehr erfolgt in einem RESET und Start des Zählvorghangs des Zählers Z2 bei Detektion des Nulldurchgangs.

Figur 5c zeigt schliesslich den Fall, dass nicht durch Erfassen des Nulldurchgangs des Stroms durch die Ladespule, sondern nach Ablauf einer definierten Zeit (bspw. erfasst durch einen weiteren Zähler) der Zähler Z2 zu einem Reset-Vorgang veranlasst wird und neu gestartet und gleichzeitig der Schalter S eingeschaltet wird (Signal START). In diesem Fall erfolgt also der Einschaltvorgang des Schalters S in festen Abständen, allerdings ist die Einschaltpulsdauer variabel (PWM).

In jedem Fall fällt also einerseits der Neustart des zweiten Zählers Z2 mit dem Einschalten des Schalters S zusammen und wird andererseits der Schalter S ausgeschaltet, wenn die verglichenen Ausgangssignale der beiden Zähler Z1, Z2 Gleichstand erreichen.

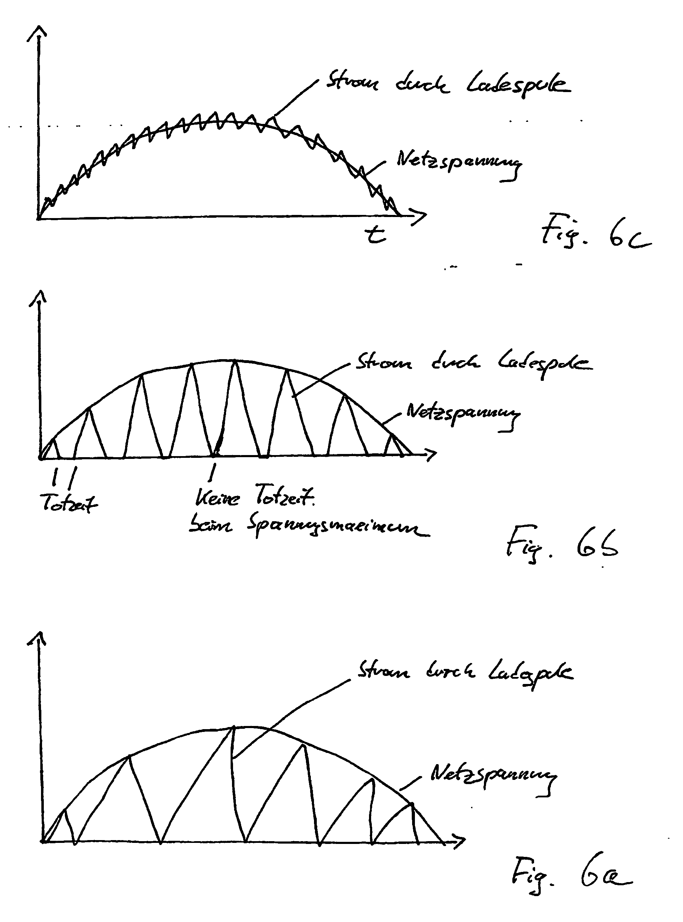

Mögliche zeitliche Verläufe des Gleichstroms durch die Ladedrossel im Verhältnis zum Netzstrom ist in Fig. 6a-6c gezeigt.

Wie in Fig. 6a gezeigt steigt bei Verwendung des Reset-Signals der Gleichstrom durch die Ladedrossel sofort wieder an, was auch "Borderline Control" genannt wird.

Wie in Fig. 6b gezeigt, kann kann weiterhin der Fall eintreten, dass zu dem Zeitpunkt, zu dem der Gleichstrom durch die Drossel bereits auf Null abgefallen ist, der zweite Zähler Z2 noch nicht an seinem Höchststand angelangt ist und der Schalter während einer Totzeit weiter geschlossen bleibt, in welcher Totzeit kein Strom durch die Drossel fliesst. Dies wird auch "Discontinous Conduction" genannt.

Andererseits kann wie in Figur 6c gezeigt der Fall eintreten, dass der Zähler Z2 seinen Höchststand zu einem Zeitpunkt erreicht, zu dem der Strom durch die Drossel noch nicht abgeklungen ist. Durch das entsprechende Schalten des Schalters wird als in diesem Fall der Gleichstrom durch die Drossel nie auf Null abfallen. Dies wird "Continous Conduction" genannt.

Die in Fig. 3 dargestellte Schaltung stellt eine allgemeine Darstellung der vorliegenden Erfindung dar, welches im Falle von n>1 durch die im Vergleich zu dem Komparator höhere Auflösung des A/D-Wandlers 15 die Möglichkeit eröffnet, die Höhe der Abweichung zwischen Sollwert Uₛₒₗₗ und Istwert Uᵢₛₜ zu berücksichtigen. Für den Fall, dass der A/D-Wandler 15 als 1-bit-Wandler verwendet wird und für die Multiplikationsfaktoren die Werte K₁=2 und K₂=0 (das Intergrier-Glied hat in diesem Fall keine Funktion) sowie als digitaler Referenzwert 0,5 gewählt werden, wird wiederum der Spezialfall eines 1-bit-PFC erhalten. Für die Verarbeitung der Signale gilt dann folgendes:

Sofern der aktuelle Istwert Uᵢₛₜ der Ausgangsgleichspannung größer ist als die Sollspannung Uₛₒₗₗ, gibt der 1-bit-A/D-Wandler 15 den Wert 1 aus. Der von dem Vergleichsblock 18 erhaltene Wert ist dann -1 + 0,5 = -0,5. Der von dem P-Glied 19 und damit dem Eingangsblock 17 berechnete Wert beträgt in diesem Fall -0,5 * 2 = -1, d.h., der Zähler Z1 zählt bei einem zu hohen Wert der Ausgangsgleichspannung abwärts, wodurch die Einschaltzeit für den Schalter S verkürzt wird. Liegt hingegen die Ausgangsgleichspannung Uᵢₛₜ unterhalb der Sollspannung Uₛₒₗₗ, so gibt der 1-bit-A/D-Wandler 15 den Wert 0 aus. Der von dem Vergleichsblock 18 erhaltene Wert ist dann 0 + 0.5 = +0,5 und der dem Zähler Zlzugeführte Wert beträgt 0,5 * 2 = 1. In diesem Fall zählt somit der erste Zähler Z1 aufwärts. Diese 1-bit-Variante stellt somit eine besonders einfache Möglichkeit dar, die Ausgangsgleichspannung zu regeln.

Sowohl in der 1-bit-Variante als auch in allgemeinen n-bit-Form weist die erfindungsgemäße Schaltung den Vorteil auf, dass sie aus standardisierten digitalen Schaltungsbauteilen besteht, die sich im Sinne der Aufgabenstellung gut in ein ASIC-Design eingliedern lassen.

## Patentansprüche

1. Elektronisches Vorschaltgerät für eine Gasentladungslampe mit einem von einer Gleichspannungsquelle (1,2) gespeisten Gleichspannungskonverter (3) mit getaktetem Schalter (S) und geregelter Ausgangsgleichspannung (U), einem von der Ausgangsgleichspannung (U) des Gleichspannungskonverters (3) gespeisten Wechselrichter (4), und einer Regelschaltung (7), der ein Sollwertsignal (Uₛₒₗₗ) sowie ein der Ausgangsgleichspannung des Gleichspannungskonverters entsprechendes Istwertsignal (Uᵢₛₜ) zugeführt wird, und die als Stellwertsignal Einschaltimpulse für den getakteten Schalter (S) erzeugt,
**dadurch gekennzeichnet,**
**dass** die Regelschaltung (7) einen ersten und einen zweiten Zähler (Z1, Z2) enthält, dass die Bitbreite des ersten Zählers (Z1) mindestens gleich der Bitbreite des zweiten Zählers (Z2) ist, dass der erste Zähler (Z1) ein solcher mit umkehrbarer Zählrichtung ist, der in Abhängigkeit davon, ob das Istwertsignal (Uᵢₛₜ) größer oder kleiner als das Sollwertsignal (Uₛₒₗₗ) ist, in die eine oder die andere Richtung zählt, dass ein Komparator (10) Ausgangssignale der beiden Zähler (Z1, Z2) zur Gewinnung des Stellwertsignals vergleicht, und dass die Pulsweite der Einschaltimpulse für den getakteten Schalter durch den zeitlichen Abstand (tₒₙ) zwischen einem Einschaltsignal (START; Uₙ) für den Schalter (S) und dem zeitlich folgenden Erreichen des Gleichstandes der miteinander verglichenen Zählstufen bestimmt ist,
wobei zum Einschaltzeitpunkt des Schalters (S) der zweite Zähler einen neuen Zählvorgang ausführt.

2. Elektronisches Vorschaltgerät nach Anspruch 1,
**dadurch gekennzeichnet,**
**dass** die Bitbreite des ersten Zählers (Z1) größer als die Bitbreite des zweiten Zählers (Z2) ist, und dass in dem Komparator (12) das Ausgangssignal des zweiten Zählers (Z2) mit einem durch einen Skalierungsfaktor geteilten Ausgangssignal des ersten Zählers (Z1) verglichen wird.

3. Elektronisches Vorschaltgerät nach einem der
vorhergehenden Ansprüche,
**dadurch gekennzeichnet,**
**dass** der Gleichspannungskonverter (3) ein Aufwärtswandler mit - vom Eingang zum Ausgang hin betrachtet - einer Ladespule (L) in einem ersten Serienzweig, mit dem Schalter (S) in einem ersten Querzweig, einer Diode (D) in einem zweiten Längszweig und einem Ladekondensator (C) in einem zweiten Querzweig ist.

4. Elektronisches Vorschaltgerät nach Anspruch 3,
**dadurch gekennzeichnet**,
ein Nullpunktdetektor (13) für den durch die Ladespule (L) des Gleichspannungskonverters (3) fließenden Gleichstrom mit einer Logikeinheit (24) verbunden ist, die den Startvorgang des zweiten Zählers (Z2) sowie das gleichzeitige Einschalten des Schalters (S) veranlasst, sobald der Nullpunktdetektor (13) den Nulldurchgang des Stroms durch die Ladespule erfasst.

5. Elektronisches Vorschaltgerät nach einem der Ansprüche 1 bis 3,
**dadurch gekennzeichnet,**
**dass** eine Logikeinheit (24) den Schalter (S) jeweils nach Ablauf einer vorbestimmten Zeitdauer schliesst und gleichzeitig den zweiten Zähler (Z2) zu einem neuen Startvorgang veranlasst.

6. Elektronisches Vorschaltgerät nach einem der
vorhergehenden Ansprüche,
**dadurch gekennzeichnet,**
**dass** das Istwertsignal (Uᵢₛₜ) mittels eines Gleichspannungssensors (14') erzeugt wird, der die Ausgangsgleichspannung (U) des Gleichspannungskonverters (3) misst, dass das Istwertsignal (Uᵢₛₜ) und das Sollwertsignal (Uₛₒₗₗ) in analoger Form den beiden Eingängen eines A/D-Wandlers (10, 15) zugeführt werden, der diese beiden Signale vergleicht und ausgangsseitig einen Digitalwert abhängig von der Differenz zwischen dem Istwertsignal (Uᵢₛₜ) und dem Sollwertsignal (Uₛₒₗₗ) erzeugt, dass der Ausgang des A/D-Wandlers (10, 15) mit dem ersten Zähler (Z1) verbunden ist, und dass der erste Zähler (Z1) abhängig von dem Ausgangswert des A/D-Wandlers (10, 15) einen Zählvorgang ausführt.

7. Elektronisches Vorschaltgerät nach Anspruch 6,
**dadurch gekennzeichnet,**
**dass** die Schrittweite des ersten Zählers variabel ist und von dem Ausgangswert des A/D-Wandlers (15) abhängt.

8. Elektronisches Vorschaltgerät nach Anspruch 7,
**dadurch gekennzeichnet,**
**dass** dem ersten Zähler (Z1) ein Digital-Filter (17) vorgeschaltet ist.

9. Verfahren zum Betrieb eines elektronischen Vorschaltgeräts für eine Gasentladungslampe mit einem von einer Gleichspannungsquelle (1,2) gespeisten Gleichspannungskonverter (3) mit getaktetem Schalter (S) und geregelter Ausgangsgleichspannung (U), einem von der Ausgangsgleichspannung (U) des Gleichspannungskonverters (3) gespeisten Wechselrichter (4), und einer Regelschaltung (7), der ein Sollwertsignal (Uₛₒₗₗ) sowie ein der Ausgangsgleichspannung des Gleichspannungskonverters entsprechendes Istwertsignal (Uᵢₛₜ) zugeführt wird, und die Einschaltimpulse für den getakteten Schalter (S) erzeugt,
**aufweisend die folgenden Schritte:**
- Vergleichen (10, 15) des Istwertsignals mit dem Sollwertsignal zur Erzeugung eines digitalen Differenzsignals (X_{IST}),
- Zuführen des digitalen Differenzsignals (X_{IST}) zu dem Zähleingang eines ersten Zählers (Z1), dessen Zählrichtung vom Vorzeichen des digitalen Differenzsignals (X_{IST}) abhängt,
- Vergleichen des Zählerstands oder des skalierten Zählerstands des ersten Zählers mit dem Zählerstand eines zweiten Zählers (Z2), der jeweils auf ein Start- oder RESET-Signal hin einen Zählvorgang beginnt,
- Einschalten des Schalters (S) und Start des zweiten Zählers (Z2) jeweils nach Ablauf einer vorbestimmten Zeit oder wenn der Strom durch eine Ladespule (L) des Gleichspannungskonverters den Nullpunkt erreicht, und
- Ausschalten des Schalters (S), wenn der Zählerstand oder der skalierte Zählerstand des ersten Zählers gleich dem Zählerstand des zweiten Zählers (Z2) ist.

10. Verfahren nach Anspruch 9,
**dadurch gekennzeichnet,**
**dass** die Bitbreite des ersten Zählers (Z1) größer als die Bitbreite des zweiten Zählers (Z2) ist, und dass das Ausgangssignal des zweiten Zählers (Z2) mit einem durch einen Skalierungsfaktor geteilten Ausgangssignal des ersten Zählers (Z1) verglichen wird.

11. Verfahren nach einem der vorhergehenden Ansprüche 9 oder 10,
**dadurch gekennzeichnet,**
**dass** das Istwertsignal (Uᵢₛₜ) mittels eines Gleichspannungssensors (14') erzeugt wird, der die Ausgangsgleichspannung (U) des Gleichspannungskonverters (3) misst, dass das Istwertsignal (Uᵢₛₜ) und das Sollwertsignal (Uₛₒₗₗ) in analoger Form den beiden Eingängen eines A/D-Wandlers (10, 15) zugeführt werden, der diese beiden Signale vergleicht und ausgangsseitig einen Digitalwert abhängig von der Differenz zwischen dem Istwertsignal (Uᵢₛₜ) und dem Sollwertsignal (Uₛₒₗₗ) erzeugt, dass der Ausgang des A/D-Wandlers (10, 15) mit dem ersten Zähler (Z1) verbunden ist, und dass der erste Zähler (Z1) abhängig von dem Ausgangswert des A/D-Wandlers (10, 15) einen Zählvorgang ausführt.

12. Verfahren nach Anspruch 11,
**dadurch gekennzeichnet,**
**dass** die Schrittweite des ersten Zählers variabel ist und von dem Ausgangswert des A/D-Wandlers (15) abhängt.

13. Verfahren nach einem der Ansprüche 9 bis 12,
**dadurch gekennzeichnet,**
**dass** das digitale Differenzsignal (X_{IST}) digital gefiltert wird.

14. Verfahren nach Anspruch 13,
**dadurch gekennzeichnet,**
**dass** die digitale Filterung eine FIR- oder IIR-Filterung ist.

## Claims

1. Electronic ballast for a gas discharge lamp having a d.c. voltage converter (3) with clocked switch (S) and regulated output d.c. voltage (U), fed from a d.c. voltage source (1, 2), an inverter (4) fed from the output d.c. voltage (U) of the d.c. voltage converter (3), and a regulation circuit (7) to which there is delivered a desired value signal (Uₛₒₗₗ) and an actual value signal (Uᵢₛₜ) corresponding to the output d.c. voltage of the d.c. voltage converter, and which generates switch-on pulses for the clocked switch (S) as setting value signal,
**characterized in that**,
the regulation circuit (7) comprises a first and a second counter (Z1, Z2),
**in that** the bit width of the first counter (Z1) is at least equal to the bit width of the second counter (Z2),
**in that** the first counter (Z1) is a counter with reversible count direction, which counts in the one or the other direction in dependence upon whether the actual value signal (Uᵢₛₜ) is greater or smaller than the desired value signal (Uₛₒₗₗ),
**in that** a comparator (10) compares the output signals of the two counters (Z1, Z2) for obtaining the setting value signal, and
**in that** the pulse width of the switch-on pulses for the clocked switch is determined by the temporal spacing (tₒₙ) between one switch-on signal (START; Uₙ) for the switch (S) and the temporally following attainment of the equality of the count stages compared with one another,
wherein at the switch-on time point of the switch (S) the second counter carries out a new count process.

2. Electronic ballast according to claim 1,
**characterized in that**,
the bit width of the first counter (Z1) is greater than the bit width of the second counter (Z2), and **in that** in the comparator (12) the output signal of the second counter (Z2) is compared with an output signal of the first counter (Z1) divided by a scaling factor.

3. Electronic ballast according to any preceding claim,
**characterized in that**,
the d.c. voltage converter (3) is an up-converter having - seen from input to output - a charge coil (L) in a first series branch, having the switch (S) in a first transverse branch, a diode (D) in a second longitudinal branch and a charge capacitor (C) in a second transverse branch.

4. Electronic ballast according to claim 3,
**characterized in that**,
a zero point detector (13) for the d.c. current flowing through the charge coil (L) of the d.c. voltage converter (3) is connected with a logic unit (24) which brings about the start procedure of the second counter (Z2) and the simultaneous switching on of the switch (S), as soon as the zero point detector (13) detects the zero crossing of the current through the charge coil.

5. Electronic ballast according to any of claims 1 to 3,
**characterized in that**,
a logic unit (24) closes the switch (S) in each case after passage of a predetermined duration of time and simultaneously causes the second counter (Z2) to effect a new start procedure.

6. Electronic ballast according to any preceding claim,
**characterized in that**,
the actual value signal (Uᵢₛₜ) is generated by means of a d.c. voltage sensor (14'), which measures the output d.c. voltage (U) of the d.c. voltage converter (3),
**in that** the actual value signal (Uᵢₛₜ) and the desired value signal (Uₛₒₗₗ) are delivered in analog form to the two inputs of an A/D converter (10, 15), which compares these two signals and on the output side generates a digital value dependent upon the difference between the actual value signal (Uᵢₛₜ) and the desired value signal (Uₛₒₗₗ),
**in that** the output of the A/D converter (10, 15) is connected with the first counter (Z1), and
**in that** the first counter (Z1) carries out a count process in dependence upon the output value of the A/D converter (10, 15).

7. Electronic ballast according to claim 6,
**characterized in that**,
the step width of the first counter is variable and depends upon the output value of the A/D converter (15).

8. Electronic ballast according to claim 7,
**characterized in that**,
a digital filter (17) is connected upstream of the first counter (Z1).

9. Method of operating an electronic ballast for a gas discharge lamp having a d.c. voltage converter (3) with clocked switch (S) and regulated output d.c. voltage (U), fed from a d.c. voltage source (1, 2), an inverter (4) fed from the output d.c. voltage (U) of the d.c. voltage converter (3), and a regulation circuit (7) to which there is delivered a desired value signal (Uₛₒₗₗ) and an actual value signal (Uᵢₛₜ) corresponding to the output d.c. voltage of the d.c. voltage converter, and which generates switch-on pulses for the clocked switch (S),
having the following steps:
- comparison (10, 15) of the actual value signal with the desired value signal for generating a digital difference signal (Xᵢₛₜ),
- delivery of the digital difference signal (Xᵢₛₜ) to the count input of a first counter (Z1), the count direction of which depends upon the sign of the digital difference signal (Xᵢₛₜ),
- comparison of the count or the scaled count of the first counter with the count of a second counter (Z2), which begins a count process in each case in response to a start or RESET signal,
- switching on of the switch (S) and starting of the second counter (Z2) in each case after expiry of a predetermined time or when the current through a charge coil (L) of the d.c. voltage converter reaches the zero point, and
- switching off the switch (S) when the count or the scaled count of the first counter is equal to the count of the second counter (Z2).

10. Method according to claim 9,
**characterized in that**,
the bit width of the first counter (Z1) is greater than the bit width of the second counter (Z2), and **in that** the output signal of the second counter (Z2) is compared with an output signal of the first counter (Z1) divided by a scaling factor.

11. Method according to claim 9 or 10,
**characterized in that**,
the actual value signal (Uᵢₛₜ) is generated by means of a d.c. voltage sensor (14'), which measures the output d.c. voltage (U) of the d.c. voltage converter (3),
**in that** the actual value signal (Uᵢₛₜ) and the desired value signal (Uₛₒₗₗ) are delivered in analog form to the two inputs of an A/D converter (10, 15), which compares these two signals and on the output side generates a digital value dependent upon the difference between the actual value signal (Uᵢₛₜ) and the desired value signal (Uₛₒₗₗ),
**in that** the output of the A/D converter (10, 15) is connected with the first counter (Z1), and
**in that** the first counter (Z1) carries out a count process in dependence upon the output value of the A/D converter (10, 15).

12. Electronic ballast according to claim 11,
**characterized in that**,
the step width of the first counter is variable and depends upon the output value of the A/D converter (15).

13. Method according to any of claims 9 to 12,
**characterized in that**,
the digital difference signal (Xᵢₛₜ) is digitally filtered.

14. Method according to claim 13,
**characterized in that**,
the digital filtering is a FIR filtering or IIR filtering.

## Revendications

1. Ballast électronique pour une lampe à décharge gazeuse comprenant un convertisseur de tension continue (3) alimenté par une source de tension continue (1, 2) avec interrupteur (S) synchronisé et tension continue de sortie (U) régulée, un onduleur (4) alimenté par la tension continue de sortie (U) du convertisseur de tension continue (3), et un circuit de réglage (7), auquel sont amenés un signal de valeur théorique (U_{théorique}) et un signal de valeur réelle (U_{réel}) correspondant à la tension continue de sortie du convertisseur de tension continue, et qui génère comme signal de valeur de commande des impulsions d'enclenchement pour l'interrupteur (S) synchronisé,
**caractérisé en ce que** le circuit de réglage (7) contient un premier et un second compteurs (Z1, Z2), **en ce que** la largeur de bit du premier compteur (Z1) est au moins égale à la largeur de bit du second compteur (Z2), **en ce que** le premier compteur (Z1) est un compteur avec un sens de comptage inversable qui compte dans un sens ou dans l'autre sens en fonction du fait que le signal de valeur réelle (U_{réel}) est supérieur ou inférieur au signal de valeur théorique (U_{théorique}), **en ce qu'**un comparateur (10) compare des signaux de sortie des deux compteurs (Z1, Z2) pour l'obtention du signal de valeur de commande et **en ce que** la largeur d'impulsion des impulsions d'enclenchement pour l'interrupteur synchronisé est déterminée par la distance dans le temps (tₒₙ) entre un signal d'enclenchement (START ; Uₙ) pour l'interrupteur (S) et le moment consécutif où l'on atteint la même indication des niveaux de comptage comparés entre eux,
le second compteur exécutant une nouvelle opération de comptage pour le moment d'enclenchement de l'interrupteur (S).

2. Ballast électronique selon la revendication 1, **caractérisé en ce que**
la largeur de bit du premier compteur (Z1) est supérieure à la largeur de bit du second compteur (Z2), et **en ce que**, dans le comparateur (12), le signal de sortie du second compteur (Z2) est comparé avec un signal de sortie, divisé par un facteur de graduation, du premier compteur (Z1).

3. Ballast électronique selon l'une quelconque des revendications précédentes, **caractérisé en ce que**
le convertisseur de tension continue (3) est un convertisseur élévateur avec une bobine de charge (L), vu de l'entrée vers la sortie, dans une première branche de série, avec l'interrupteur (S) dans une première branche transversale, une diode (D) dans une seconde branche longitudinale et un condensateur de charge (C) dans une seconde branche transversale.

4. Ballast électronique selon la revendication 3, **caractérisé en ce que**
un détecteur de point zéro (13) pour le courant continu circulant à travers la bobine de charge (L) du convertisseur de tension continue (3) est relié à une unité de logique (24) qui ordonne l'opération de démarrage du second compteur (Z2) et l'enclenchement simultané de l'interrupteur (S) dès que le détecteur de point zéro (13) enregistre le passage par zéro du courant à travers la bobine de charge.

5. Ballast électronique selon l'une quelconque des revendications 1 à 3, **caractérisé en ce que**
une unité logique (24) ferme l'interrupteur (S) respectivement après l'expiration d'une durée de temps prédéfinie et ordonne en même temps au second compteur (Z2) d'effectuer une nouvelle opération de démarrage.

6. Ballast électronique selon l'une quelconque des revendications précédentes, **caractérisé en ce que**
le signal de valeur réelle (U_{réel}) est généré au moyen d'un capteur de tension continue (14') qui mesure la tension continue de sortie (U) du convertisseur de tension continue (3), **en ce que** le signal de valeur réelle (U_{réel}) et le signal de valeur théorique (U_{théorique}) sont amenés dans une forme analogique aux deux entrées d'un convertisseur analogique/numérique (10, 15) qui compare ces deux signaux et génère côté sortie une valeur numérique en fonction de la différence entre le signal de valeur réelle (U_{réel}) et le signal de valeur théorique (U_{théorique}), **en ce que** la sortie du convertisseur analogique/numérique (10, 15) est reliée au premier compteur (Z1) et **en ce que** le premier compteur (Z1) exécute une opération de comptage en fonction de la valeur de sortie du convertisseur analogique/numérique (10, 15).

7. Ballast électronique selon la revendication 6,
**caractérisé en ce que**
l'incrémerit du premier compteur est variable et dépend de la valeur de sortie du convertisseur analogique/numérique (10, 15).

8. Ballast électronique selon la revendication 7, **caractérisé en ce que**
un filtre numérique (17) est monté en amont du premier compteur (Z1).

9. Procédé pour l'exploitation d'un ballast électronique pour une lampe à décharge gazeuse avec un convertisseur de tension continue (3) alimenté par une source de tension continue (1, 2) avec interrupteur (S) synchronisé et tension continue de sortie (U) régulée, un onduleur (4) alimenté par la tension continue de sortie (U) du convertisseur de tension continue (3) et un circuit de réglage (7), auquel sont amenés un signal de valeur théorique (U_{théorique}) et un signal de valeur réelle (U_{réel}) correspondant à la tension continue de sortie du convertisseur de tension continue, et qui génère les impulsions d'enclenchement pour l'interrupteur (S) synchronisé,
présentant les étapes suivantes :
- comparaison (10, 15) du signal de valeur réelle avec le signal de valeur théorique pour la génération d'un signal de différence numérique (X_{réel}),
- amenée du signal de différence (X_{réel}) numérique à l'entrée de comptage d'un premier compteur (Z1), dont le sens du comptage dépend du signe du signal de différence (X_{réel}) numérique,
- comparaison de l'indication du compteur ou de l'indication graduée du premier compteur avec l'indication du compteur d'un second compteur (Z2) qui commence une opération de comptage respectivement sur un signal de démarrage ou d'un signal de remise à zéro,
- enclenchement de l'interrupteur (S) et démarrage du second compteur (Z2) respectivement après l'écoulement d'un temps prédéfini ou lorsque le courant traversant une bobine de charge (L) du convertisseur de tension continue atteint le point zéro, et
- désenclenchement de l'interrupteur (S) lorsque l'indication du compteur ou l'indication graduée du premier compteur est identique à l'indication du second compteur (Z2).

10. Procédé selon la revendication 9, **caractérisé en ce que**,
la largeur de bit du premier compteur (Z1) est supérieure à la largeur de bit du second compteur (Z2), et **en ce que** le signal de sortie du second compteur (Z2) est comparé avec un signal de sortie, divisé par un facteur de graduation, du premier compteur (Z1).

11. Procédé selon l'une quelconque des revendications 9 ou 10, **caractérisé en ce que**,
le signal de valeur réelle (U_{réel}) est généré au moyen d'un capteur de tension continue (14'), qui mesure la tension continue de sortie (U) du convertisseur de tension continue (3), **en ce que** le signal de valeur réelle (U_{réel}) et le signal de valeur théorique (U_{théorique}) sont amenés dans une forme analogique aux deux entrées d'un convertisseur analogique/numérique (10, 15), qui compare ces deux signaux et génère côté sortie une valeur numérique en fonction de la différence entre le signal de valeur réelle (U_{réel}) et le signal de valeur théorique (U_{théorique}), **en ce que** la sortie du convertisseur analogique/numérique (10, 15) est reliée au premier compteur (Z1) et **en ce que** le second compteur (Z1) exécute une opération de comptage en fonction de la valeur de sortie du convertisseur analogique/numérique (10, 15).

12. Procédé selon la revendication
11, **caractérisé en ce que**
l'incrément du premier compteur est variable et dépend de la valeur de sortie du convertisseur analogique/numérique (15).

13. Procédé selon l'une quelconque des revendications 9 à 12, **caractérisé en ce que**
le signal de différence numérique (X_{réel}) est filtré de façon numérique.

14. Procédé selon la revendication 13, **caractérisé en ce que** le filtrage numérique est un filtrage FIR ou un filtrage IIR.
